Europäisches Patentamt

European Patent Office

Office européen des brevets

(19)

(11) Publication number:  0 135 495
A2

(12) EUROPEAN PATENT APPLICATION

(21) Application number: 84890142.7

(22) Date of filing: 27.07.84

(51) Int. Cl.⁴: G 05 B 19/417

(30) Priority: 28.07.83 US 518053
27.09.83 US 536374

(43) Date of publication of application:
27.03.85 Bulletin 85/13

(84) Designated Contracting States:
AT CH DE FR GB IT LI SE

(71) Applicant: POLAROID CORPORATION
549 Technology Square
Cambridge, Massachusetts 02139(US)

(72) Inventor: Khusro, Mohammed M.
182 Jenkins Road
Andover Massachusetts 01810(US)

(72) Inventor: Sullivan, William F. Jr.
167 Third Street
Stoughton Massachusetts(US)

(74) Representative: Holzer, Walter, Dipl.-Ing. et al,
Patentanwälte Dipl.-Ing. Dr.techn. Schütz Alfred Dr.phil.
Mrazek Engelbert Dipl.-Ing. Holzer Walter Dipl.-Ing.
Pfeifer Otto Fleischmanngasse 9
A-1040 Wien(AT)

(54) Positioning system employing differential object positioning sensors.

(57) A simplified object positioning system for use with automatic product assembly equipment for precisely positioning objects to a particular location within a predetermined area once the object has been moved to within a minimum distance from the particular location. The system includes a support surface coupled to a drive source that is capable of moving the support surface in any direction along a given plane and/or about an axis perpendicular to the given plane in response to drive source positioning signals. The system also includes a module for sensing object position which comprises a generally planar set of photosensitive elements electrically divided into a plurality of groups and positioned to sense a portion of the light from a light source that backlights the object to be positioned located on the movable table. The light sensing elements overlie the space between a silhouette or shadow of the backlighted object and a slightly enlarged negative object image for the purpose of sensing spacing-size related light passing through this space, at a plurality of different locations, so that electrical signals representative of the spacing size at these locations can be generated and subsequently employed to cause the drive source to adjust the negative image to object silhouette spacing to a predetermined size and thereby precisely position the object to the particular location within the predetermined area enclosed by the slightly enlarged negative object image.

./...

Fig. 1

## BACKGROUND OF THE INVENTION

The present invention relates to automatic object positioning apparatus, in general, and to apparatus for precisely positioning a piece-part to a particular location within a predetermined area for subsequent assembly into a product, in particular.

Automated product assembly machines, for example, have been employed in manufacturing industries for a great number of years. More recently, though, technologically more sophisticated devices have been employed with such machines for such purposes. These more recent devices are commonly referred to as industrial robots. Industrial robots are capable of repetitively performing various mechanical tasks with a high degree of speed and accuracy in response to a set of programmed instructions such as the task of moving a piece-part or workpiece from one position to another as part of a product assembly process.

In order to employ the typical industrial robot in certain portions of an automated assembly process, it is essential that the piece-part be fairly accurately positioned for the robot prior to its initially moving same in order to avoid subsequent piece-part to piece-part misalignment during product assembly resulting from an initial positioning error. While an industrial robot is quite capable of precisely maintaining or changing the orientation of a piece-part when moving the part from one location to another, it is also true that any deviation or error between the desired piece-part location where the robot assumes the piece-part to be located and the actual piece-part location prior to initial piece-part movement, will also be maintained by the robot throughout piece-part movement because of the robot's inability to detect initial piece-part position errors. Therefore, in order to insure that one piece-part is properly mated to another during product assembly with a minimum of piece-part to piece-part misalignment errors when an industrial robot is employed for such purposes, it is essential that a piece-part be placed as close as possible to a particular initial position before being moved by the robot. The closer the piece-part to be positioned is placed to said particular initial position, the smaller will be any piece-part to piece-part misalignment during subsequent product assembly.

Present techniques for positioning a piece-part prior to movement of same by an industrial robot employ the use of such components as a conventional $X, Y, \Theta$ piece-part positioning turntable in conjunction with a piece-part image sensing TV camera and a digital computer in which the physical characteristics of a particular piece-part are stored for subsequent piece-part recognition and positioning purposes. While these techniques are effective for such purposes, computers and TV cameras are relatively expensive items and a computer requires the services of a relatively high-cost computer programmer in order to describe the physical characteristics of a particular type of piece-part in sufficiently detailed computer language so as to be unambiguously recognized by the piece-part positioning system. In addition, while computerized piece-part positioning systems are able to position piece-parts at an acceptable rate of speed for many product assembly applications, their ability to position relatively complex shaped piece-parts at the same acceptable rate of speed or the ability to position less complex shaped piece-parts at high rates of speed is limited.

The primary object of the present invention therefore is to provide an object positioning system with improved object positioning accuracy.

Another object of the present invention is to provide close or minimum tolerance object positioning apparatus for use in conjunction with relatively higher tolerance object positioning apparatus.

Yet another object of the present invention is to provide an object positioning system with improved object positioning accuracy that includes means for readily describing the part to be positioned in machine recognizabale form.

A further object of the present invention is to provide an improved positioning-accuracy object positioning system that readily allows substitution of the machine recognizable description of one type of object to be positioned for that of another.

Other objects, features and adavantages of the present invention will be readily apparent from the following detailed description of the preferred embodiment thereof taken in conjunction with the accompanying drawings.

## SUMMARY OF THE INVENTION

In accordance with the teachings of the present invention, a simplified close-tolerance object positioning system is disclosed for precisely positioning objects to a partilar location within a predetermined area once the object has been moved to within a minimum distance from said particular location. The system includes a movable support surface coupled to drive means capable of moving said surface in any direction along a given plane and/or about an axis perpendicular to said given plane in response to drive means positioning signals. The system also includes object sensing means comprising a generally planar set of photosensitive elements electrically divided into a plurality of groups and positioned to sense light from a light source that backlights the object to be positioned located on a surface of said movable table. The light sensing elements overlie the space between a silhouette or a shadow of the backlighted object and a slightly enlarged negative object image for the purpose of sensing spacing-size related light passing through said space, at a plurality of different locations, so that electrical signals representative of spacing size at said locations can be generated and subsequently employed to cause said drive source to adjust said negative image to object silhouette spacing to a predetermined size and thereby precisely position said object to said particular location within said predetermined area.

## BRIEF DESCRIPTION OF THE DRAWINGS

Fig. 1 is a system diagram of the object positioning apparatus of the present invention.

Fig. 2 is a signal flow block diagram of the sequence of operation of the control system portion of the object positioning system of the present invention.

Fig. 3 is an enlarged elevational view, partly in section, of the object sensing vision module shown in Fig. 1 and a complex piece-part whose position is being sensed by said module.

Fig. 4A is an enlarged top or plan view of the complex shaped piece-part shown in drawing Fig. 3.

Fig. 4B is a side elevational view of the complex piece-part shown in drawing Fig. 4A.

Fig. 5 is a relatively opaque, slightly enlarged outline or negative image of the complex piece-part to be positioned as shown in drawing Fig. 4A.

Fig. 6 is a set of the light sensing photosensitive elements incorporated in the vision module of Fig. 3 positioned for sensing the piece-part of Figs. 4A and 4B.

Fig. 7 shows the negative piece-part image of Fig. 5 overlaying the set of photosensitive elements shown in drawing Fig. 6.

Fig. 8 is an electrical block diagram of the object positioning control system of the present invention.

DESCRIPTION OF THE PREFERRED EMBODIMENTS

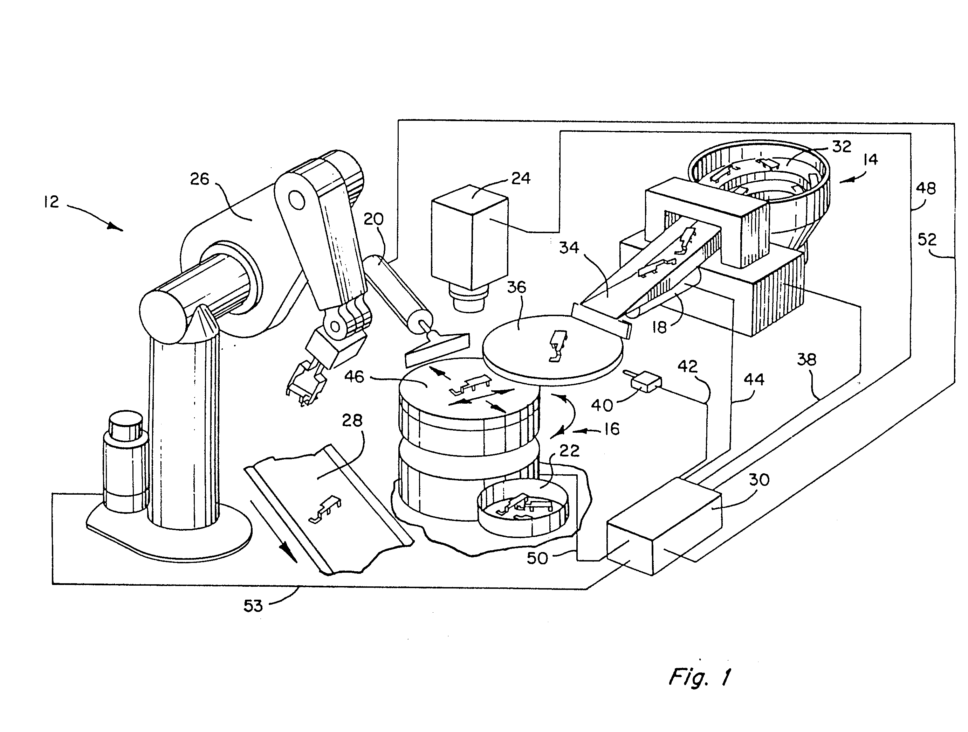

In Fig. 1 of the drawings, a system diagram of object positioning apparatus 12 incorporating a preferred embodiment of the present invention, is depicted. An object or piece-part to be positioned initially must be placed no more than a minimum distance from a particular location before the present apparatus can be effectively employed for part positioning purposes. A conventional, selectively actuated, part-positioning mechanical hopper (not shown) can be employed for this type of positioning for parts having uncomplicated or relatively simple shapes

0135495

The major components associated with apparatus 12 are mechanical vibrator 14 for supplying and delivering the parts to be positioned, X,Y,θ table 16 for moving the part in any direction within a particular plane and/or about an axis at right angles to said plane to a particular location within a predetermined area, a pair of electrically activated actuators with one actuator 18 for pushing the part onto table 16 and another actuator 20 for pushing rejected parts off said table and into receptacle 22, vision module 24 for determining piece-part position relative to said predetermined area and for generating signals representative of said relative position, industrial robot 26 that places properly positioned piece-parts on conveyor belt 28 or some other such location and control unit 30 that controls the operation of these major apparatus 12 components.

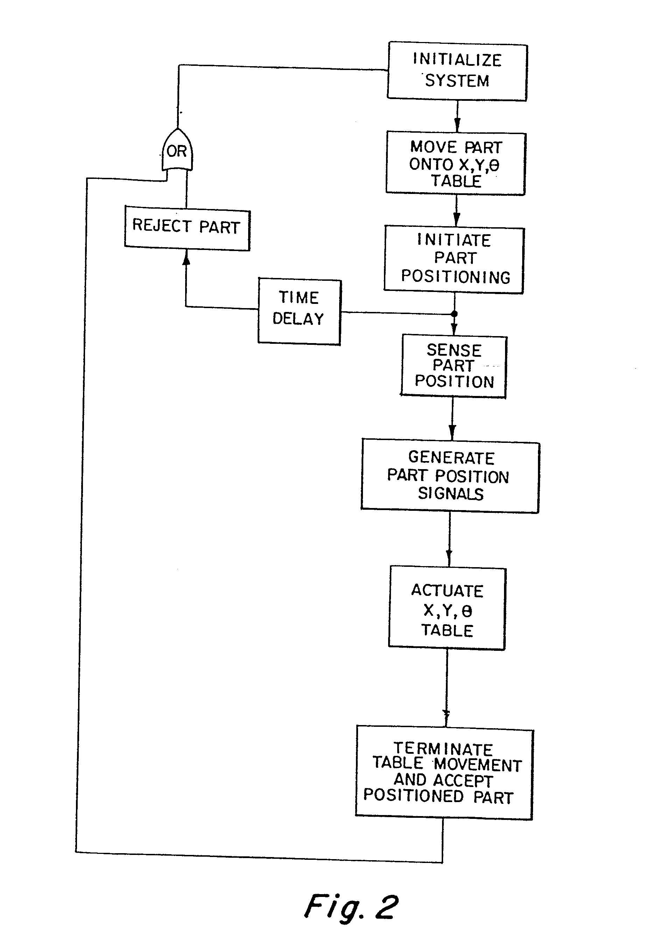

Mechanical vibrator 14 moves piece-parts from its piece-part containing hopper 32 down chute 34 and onto receiving table 36 when activated by control unit 30 through path 38. Piece-part presence on receiving table 36 is detected by conventional object sensing device 40 and a signal indicating such presence is routed to control unit 30 through path 42. The signal flow block diagram of Fig. 2 shows the overall sequence of operation of positioning apparatus 12. With reference to both Figs. 1 and 2, after the system has been initialized and upon receipt of an activation signal from control unit 30 through path 44, actuator 18 pushes a single piece-part that has been sensed by sensing device 40 onto backlighted surface 46 of table 16 for part positioning purposes. The retraction of actuator 18 to its initial or home position is the signal that initiates part positioning and starts a timer that will cause the

.Y.

piece-part to be rejected if not properly positioned
within a selected period of time (normally 2 seconds).
The initial or actual position of this piece-part on
surface 46 is sensed by vision module 24 (described in
detail below) and its position is compared with the
desired position established and/or defined within said
module 24. Module 24 subsequently generates piece-part
position signals that are routed to table 16 through
control unit 30 and paths 48 and 50 for table 16 positioning purposes. Upon receipt of these position signals,
table 16 moves its upper portion containing surface 46
together with the piece-part located thereon along the
plane of said surface 46 and/or about an axis that is
perpendicular to surface 46 until the piece-part is positioned to the desired position as determined by vision
module 24. Movement of the upper portion of table 16 and
the piece-part located thereon is terminated once the
piece-part has been moved to said desired position. If
the piece-part is not positioned to the desired position
within the above-mentioned period of time, actuator 20
pushes the piece-part into receptacle 22 in response to a
reject signal from control unit 30 through path 52. If
the piece-part is positioned to the desired position
within the alloted span of time, the piece-part is picked
up from what is now an extremely well defined position by
industrial robot 26 in response to a piece-part position
signal from vision module 24 to control unit 30 through
path 48 and preprogrammed industrial robot positioning
signals from said control unit 30 to robot 26 through path
53 and placed on conveyor belt 28 or similar location, in
a similarly well-defined position, by said robot 26.

Several of the components of positioning apparatus 12 such as mechanical vibrator 14, actuators 18 and 20
and industrial robot 26 are fairly conventional devices
while others such as vision module 24, control unit 30 and portions of X,Y,θ table 16 are not. It is primarily, though not exclusively, the design and interaction of these latter three components that embodies the present inventive concept, and these components and their relationship to one another and to the other components of apparatus 12 will now be described in detail.

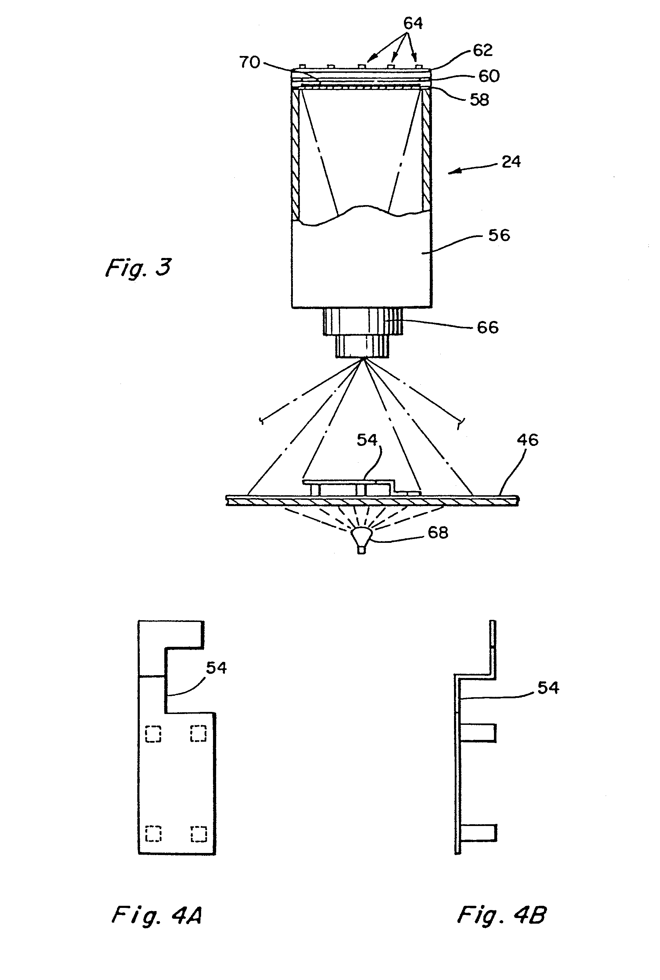

Vision module 24, as noted above, senses piece-part position relative to a predetermined area, such as the position of piece-part 54, and generates an electrical signal(s) representative of said relative position. Enlarged top and side views of part 54 are shown in drawing Figs. 4A and 4B, respectively. With reference to Fig. 3, module 24 includes housing 56, of generally rectangular cross section, which is mounted in a fixed position above surface 46 of part-moving table 16. One end of housing 56 has three adjacent part-position sensing layers enclosing one end thereof. Innermost layer 58 is a glass light-diffusing layer whose function is to uniformly distribute light falling on one side thereof. Middle layer 60 is a slightly enlarged transparency of a negative image of the part to be positioned. The outermost or photosensitive layer 62 includes a set of photosensitive elements 64 that, in conjunction with negative image layer 60 and a silhouette, shadow or image of said piece-part 54, generate an electrical signal representative of piece-part 54 position relative to the area enclosed by the negative piece-part image on said image layer 60 in a manner to be described in detail below. Housing 56 of module 24 also includes image-forming, light-focusing lens 66 at the end of housing 56 opposite from that of end layers 58, 60 and 62 for focusing an image of piece-part 54. Light source 68 within the upper or movable portion of table 16, (Fig. 1) lights the transluscent top surface 46 of said table 16 while at the same backlighting complex product piece-part 54 positioned thereon. In operation, image or silhouette 70 of backlighted part 54 is focused on or adjacent light diffusing layer 58 by lens 66. The part positioning signals produced by the photosensitive elements of photosensitive set 64 are generated whenever image 70 of part 54 and the slightly enlarged negative image of said part 54 in layer 60 are out of predetermined registration or alignment with one another. Following are the specific details of how the part positioning signals are generated by such misalignment.

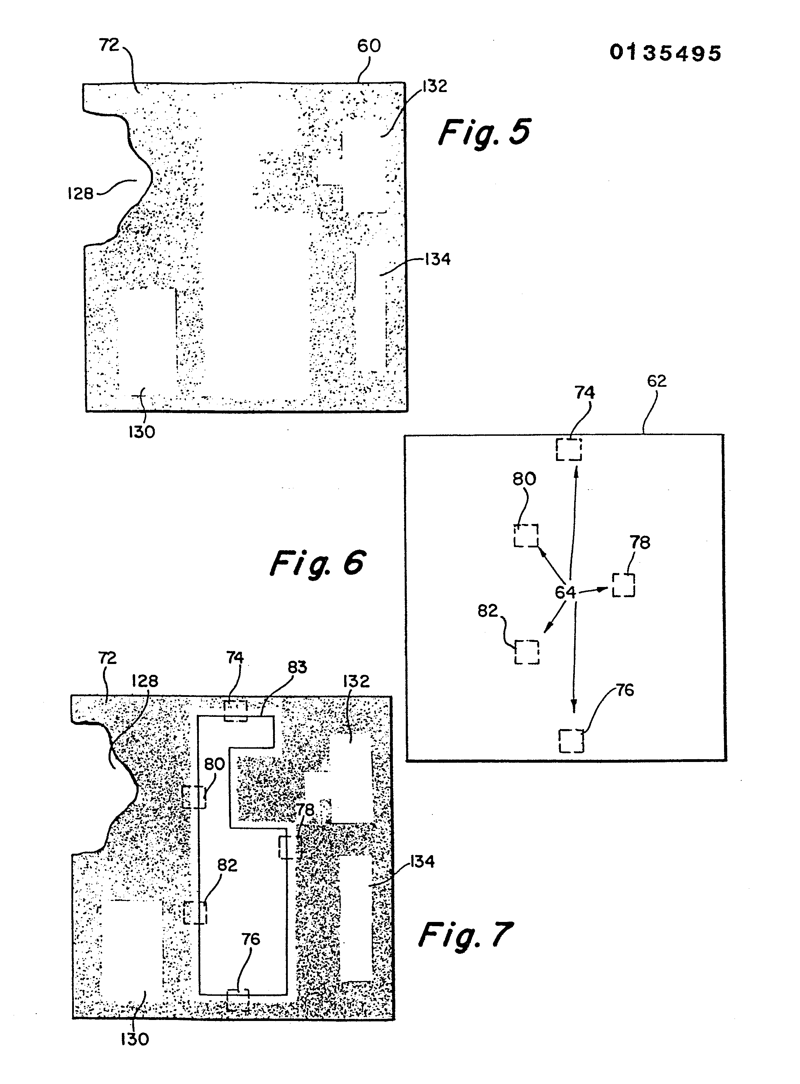

An enlarged bottom view of otherwise transparent negative image layer 60 that cooperates with photosensitive element set 64 and actual piece-part image 70 for object or part positioning purposes is shown in drawing Fig. 5. Image layer 60 consists of a transparency of slightly enlarged negative image 72 of part 54 (Figs. 3, 4A and 4B) which is the part to be positioned by automatic piece-part positioning apparatus 12 (Fig. 1). This slightly enlarged negative image 72 is relatively opaque, is produced by standard or conventional photographic techniques for each different type of part to be positioned and encloses the actual predetermined area within which the piece-part is to be positioned. Fig. 6 is an enlarged bottom view of the set of photosensitive elements on layer 62 as shown in drawing Fig. 3. The individual elements in element set 64 are located in predetermined positions, said set 64 consisting of five conventional photosensitive elements 74, 76, 78, 80 and 82, each of which is 9,5 mm square, and which are electrically subdivided into three groups for the purpose of generating three sets of light-responsive signals for part positioning purposes. These conventional photosensitive elements generate an electrical signal in a fairly linear relationship to the size of the photosensitive area being illuminated whenever they are illuminated by a suitable light source of sufficient intensity.

When layer 60, which includes enlarged negative image 72 (Fig. 5), and photosensitive set 64 (Fig.6) mounted on transparent layer 62 are placed in the relative positions within vision module 24 shown in drawing Fig. 3, negative image 72 overlies portions of photosensitive set 64 in the manner shown in drawing Fig. 7. When the part to be positioned has been moved to the above-mentioned particular location within said predetermined area by · automatic positioning apparatus 12, which is the area enclosed by the enlarged negative piece-part image, the shadow or actual image of a backlighted piece-part, such as the image of piece-part 54 in drawing Fig. 3 that is focused on or adjacent layer 60 by vision module lens 66, will be in a predetermined and generally symmetrically aligned positioned within said negative piece-part image 72 which is also the condition that causes said apparatus 12 to terminate part 54 movement. The outline of the shadow or image 70 of piece-part 54 is indicated in drawing Fig. 7 by object outline 83. In this position, the photosensitive elements of element set 64 straddle or overlie the space between the actual lens 66 formed image of part 54 and the slightly enlarged negative image of said part 54 at five different locations. The average width of the spacing between enlarged negative piece-part image 72 and said outline 83 of the actual piece-part image 70 is preferably about 1,6mm when the piece-part image is positioned to said symmetrically aligned position within in the area enclosed by negative piece-part image 72. Following is an explanation of how photosensitive element set 64, enlarged negative image 72 of the part to be positioned and the actual image or shadow of a piece-part such as piece-part 54 interact for precise part positionig purposes.

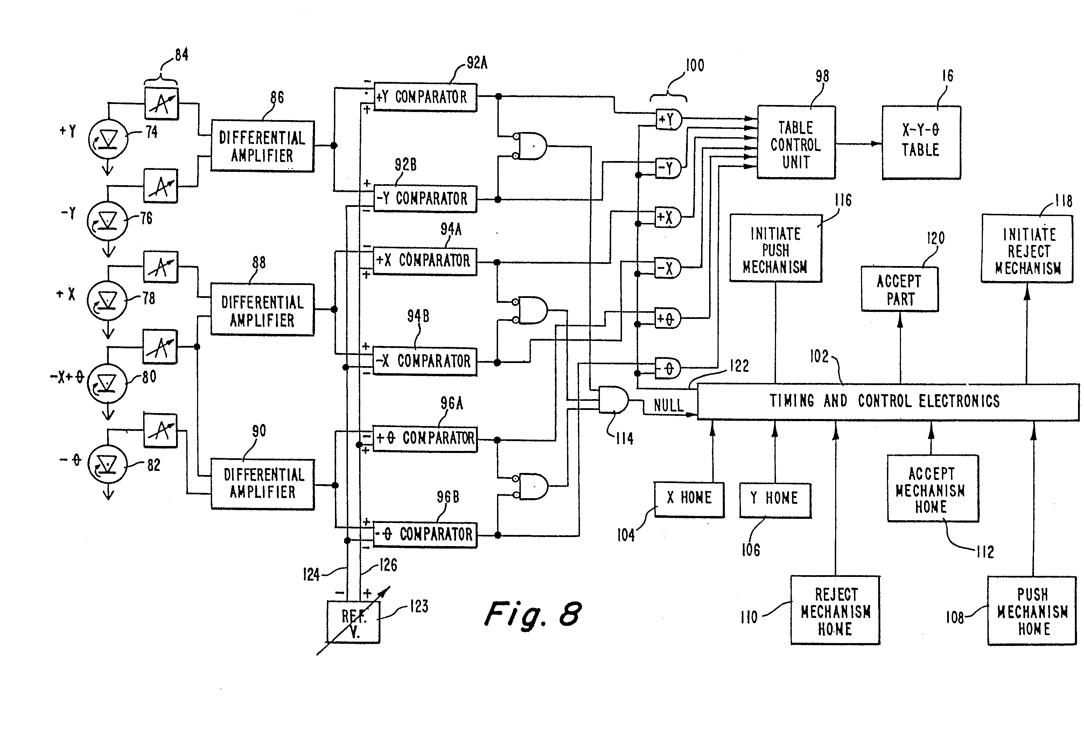

Fig. 8 shows a signal flow block diagram of the control system portion of the object positioning system of the present invention that relies on the interaction of the above-mentioned photosensitive element set 64, slightly enlarged negative image 72 and, for this particular object, the image of part 54 formed by lens 66, for
object or part positioning purposes. Photosensitive
elements 74, 76, 78, 80 and 82 schematically shown in
drawing Fig. 8 are the same as the photosensitive
elements with the corresponding reference numerals shown
in drawing Figs. 6 and 7. With continued reference to
Fig. 8, each of these photosensitive elements has its
output connected to a variable gain amplifier 84. Specifically, the output of +Y photosensitive element 74 and -Y
photosensitive element 76 are connected to variable gain
amplifiers whose outputs are connected to the input of
differential amplifier 86. Similarly, the amplified
output of +X photosensitive element 78 and -X, +θ photosensitive element 80 are connected to the input of
differential amplifier 88. In addition to differential
amplifier 88, the amplified output of -X, +θ photosensi-
tive element 80 is        applied to the input of differential amplifier 90 together with the amplified output of
-θ photosensitive element 82. The outputs of each of the
differential amplifiers 86, 88 and 90 are connected to a
pair of deadband providing comparators whose function is
to prevent activation of the object positioning system
in either of two movement directions when the part to be
positioned has been moved to within a minimum position
tolerance (normally + or - 0,025 mm) of a particular
target position. The output of differential amplifier
86 is connected to an input of +Y comparator 92A and -Y
comparator 92B, the output of differential amplifier 88
is connected to an input of +X comparator 94A and -X
comparator 94B and the output of differential amplifier
90 is connected to inputs of +θ comparator 96A and -θ
comparataor 96B. The outputs of these comparators are
routed to table control unit 98 and then to X,Y,θ part
postioning table 16 through a set of enabling gates, collectively designated reference numeral 100, to control part positioning by the rectilinear and/or rotational movement of surface 46 of table 16.

Part of the part-positioning control scheme of part-positioning appratus 12 (Fig. 1) requires that certain movable components of said apparatus 12 return to an initial or predetermined home position for each part-positioning cycle. Signals representative of the condition of such components are routed to timing and control electronics 102 for the control of apparatus 12 in accordance with said control scheme. With reference to Fig. 1 also, X Home and Y Home signals 104 and 106 respectively indicate the positioning of surface 46 of the upper or movable portion of table 16 to its initial position. Similarly, Push Mechanism Home signal 108 and Reject Mechanism Home signal 110 indicate when part introducing actuator 18 and part rejecting actuator 20, respectively, have returned to their initial positions. Accept Mechanism Home signal 112 indicates the return of industrial robot 26 to its initial position and the input to timing and control electronics 102 from AND gate 114 indicates no output from any of the deadband-providing comparators and their associated differential amplifiers which signifies that the part to be positioned has been moved to the desired or target location mentioned above. Initiate Push Mechanism signal 116 causes actuator 18 to push a part from receiving table 36 to surface 46 of table 16, Initiate Reject Mechanism signal 118 causes actuator 20 to push a rejected part into receptacle 22 and Accept Part signal 120 causes industrial robot 26 to move a properly positioned piece-part from surface 46 of table 16 to conveyor 28, or some similar location, into what would then be a precisely defined piece-part position. Timing and control electronics 102 also transmits a table 16 control unit enabling signal to enabling gates 100, through path 122, once each part-positioning cycle.

The control system of ·Fig. 8 is adjusted and/or calibrated for each different type of object or piece-part for automatic object positioning after image layer 60 and photosensitive element set 64 on layer 62 have been properly positioned within vision module 24. Once again referring to Figs. 3 and 7, layer 60, which includes negative image 72 of piece-part 54, is placed within vision module 24 in the position shown in the partly sectioned view of said module 24 shown in drawing Fig. 3. Photosensitive element set 64 includes photosensitive elements 74, 76, 78, 80 and 82 positioned on outer layer 62 such that approximately one-half of the 9,5 mm square surface area of each of said elements projects into the clear or non-opaque center portion of layer 60 that is seen when said center portion is viewed from surface 46 of table 16 in Fig. 3, said view being schematically illustrated in the bottom view of layer 60 shown in drawing Fig. 7. In this position, light rays from light source 68 mounted within the upper movable portion of table 16 strike that portion of each of the photosensitive elements projecting into that portion of image layer 60 enclosed by negative image 72. In this condition, each of the photosensitive elements generate a voltage proportional to the dimensions of the photosensitive element area being illuminated by said light source 68. With photosensitive elements 74, 76, 78, 80 and 82 being so illuminated by light source 68, the voltage levels at the outputs of differential amplifiers 86, 88 and 90 are equalized by adjusting the gain of either or both of the amplifiers that are electrically coupled to the inputs of each of said differential amplifiers. If the position to which the piece-part is positioned by apparatus 12 causes piece-part to piece-part misalignment during automatic product assembly after this calibration process is complete, this position can be changed by adjusting one or more of the amplifiers 84. A less desirable method of accomplishing such a position change would be to change the relative position between vision module 24 and part-positioning table 16.

In addition to calibrating the light sensing portion of the positioning apparatus 12 control system, the deadband providing portion of said control system must also be calibrated. This is accomplished by providing a continuous 10 mv source of either positive or negative DC voltage to one of the two inputs of each of the comparators 92A, 92B, 94A, 94B, 96A and 96B. This continuous source of voltage is provided by adjustable reference voltage source 123 through either paths 124 or 126. The output from each of the differential amplifiers 86, 88, and 90 can be either positive or negative and therefore the output of each of the differential amplifiers must exceed + or - 10 mv before any of said comparators will respond to a differential amplifier input. An input from differential amplifiers 86, 88 and/or 90 in excess of 10 mv is generated when the level of illumination falling on one photosensitive element feeding one input terminal of a particular differential amplifier is reduced sufficiently below the illumination level of the other photosensitive element feeding the other input terminal of the same differential amplifier. Such a differential reduction in illumination normally occurs during part positioning when a part is moved onto surface 46 of X,Y,θ table 16 (Fig. 1) for part-positioning purposes. An output from differential amplifiers 86, 88 and/or 90 of sufficient magnitude at the appropriate time in the part-positioning cycle will cause X,Y,θ table 16 to move an object to a particular location within a predetermined area or the area enclosed by the enlarged negative image of the part to be positioned.

OPERATION

Following is a more detailed explanation of the operation of object positioning apparatus 12 that is operated for the purpose of placing an object or piece-part in a precisely defined position. Before operating the part-positioning apparatus, it is assumed that image layer 60 that includes a negative image of the object or part to be positioned has been prepared and properly positioned within vision module 24 (Fig. 3) and that photosensitive element set 64 is positioned on photosensitive layer 60 within module 24 for the proper sensing of illumination from table 16 mounted light source 68. It is also assumed that the control system positioning apparatus including the deadband levels has been fully calibrated, that parts are present in hopper 32, that a part has been detected on receiving table 36 by object sensing apparatus 40 and that all the movable mechanisms described above are at their initial or home positions. With reference to Figs. 1, 3, 7 and 8, the part-positioning sequence begins when timing and control electronics 102 enables gates 100 and generates Initiate Push Mechanism signal 116 which causes actuator 18 to move a piece part to a position on backlighted surface 46 of table 16 that is fairly close to the target or desired position, and then returns to its initial or home position. When this occurrs, some of the light that had been illuminating a portion of photosensitive elements 74, 76, 78, 80 and/or 82 of photosensitive element set 64 will be partially blocked by the shadow or actual image of the piece-part moved onto said backlighted table surface 46 by actuator 18, thereby reducing the illumination falling on one or more of said elements and thereby causing the voltage output produced by one or more of said elements in response to light source 68 illumination to be reduced. This reduction in illumination and corresponding

0135495

reduction in output voltage level of one or more of said photosenstive elements will cause a voltage difference to appear at the input to differential amplifiers 86, 88 and/or 90 which, in turn, causes one or more of said amplifiers to generate an amplified DC voltage difference signal of a particular polarity at the output terminal of one or more of said differential amplifiers. An output voltage in excess of the + or - 10 mv comparator deadband level from differential amplifiers 86 or 88 will cause comparators 92A or 92B to generate a + or - Y axis object positioning signal or cause comparators 94A or 94B to generate a + or - X axis object positioning signal, respectively, which will be routed to table 16 control unit 98 through enabling gates 100 for part positioning purposes. Upon receipt of + or - X or + or - Y part positioning signals by control unit 98, surface 46 of table 16 moves a part positioned thereon along a plane containing surface 46 in a + or - X and/or a + or - Y direction in accordance with a standard rectangular coordinate system. Similarly, an output in excess of the + or - 10 mv comparator deadband level from differential amplifier 90 will cause comparators 96A or 96B to generate + or - $\theta$ part positioning signals which will also be routed to table 16 control unit 98 through enabling gates 100 for part positioning purposes. Upon receipt of + or - $\theta$ part positioning signal by control unit 98, surface 46 of table 16 moves a part positioned thereon around an axis that is perpendicular to a plane containing surface 46 in either a + or - $\theta$ direction in accordance with a standard polar coordinate system. When the piece-part has been moved by table 16 such that its silhouette or actual image 70 is in predetermined registration with the area enclosed by the enlarged negative image of the piece-part to be positioned, which in this case is the image of piece-part 54 as schematically shown in drawing Figs. 7, the spacing between actual immage 70 and enlarged negative image 72 will be fairly uniform throughout which will cause the amplified electrical signal resulting from illumination falling on all of the photosensitive elements to become equalized even though each of these elements will be receiving less illumination at the point of image registration than was received during calibration when there were no light-blocking parts present on object supporting surface 46. When the registration of actual image 70 within negative image 72 occurs within the alloted span of time (normally two seconds), the amplified output voltage level of each of the photosensitive elements become equalized as previously explained, thereby removing all differential input voltages from differential ampifiers 86, 88 and/or 90 which is the condition that terminates table 16 part-positioning movement. If part-positioning does not occur within the alloted time from the time that the Push Mechanism or actuator 18 returns to its home position after pushing a part onto table 16, the part will· be rejected or pushed into receptacle 22 by actuator 20 and then the entire part-positioning system will be reinitialized. AND gate 114 which senses all the outputs from comprators 92A, 92B, 94A, 94B, 96A and 96B, senses when a piece-part has been positioned to the target position which is indicated by a lack of an output signal from any of said comparators and informs timing and control electronics 102 when this null condition occurs. When this condition occurs, timing and control electronics 102 generates Accept Part Signal 120, causing idustrial robot 26 to place piece-part 54 on conveyor belt 28 in what then would be a precisely defined position. When the various mechanisms of positioning apparatus 12 have been positioned to their initial or home positions, the above-described sequence is repeated for all of the piece-parts to be positioned remaining within hopper 36 of mechaical vibrator 14.

As previously explained above, the part-positioning apparatus of the present invention is preferably employed with a relatively coarse part-positioning system of the type disclosed in the above-cited U.S. patent application by W. F. SULLIVAN, the complete disclosure therein being specifically incorporated herein by reference. This part-positioning apparatus senses light from a light source that backlights the part to be positioned which is a technique that is employed in the part-positioning apparatus of the present invention and schematically shown in drawing Fig. 3. If light from a piece-part backlighting light source is to be sensed by light sensing apparatus such as that disclosed in the above-cited SULLIVAN application and said light sensing apparatus is to be included within vision module 24 of the part-positioning apparatus of the present invention, provision must be made to prevent the light sensing apparatus in one part-positioning system from blocking light to the light sensing apparatus of the other part-positioning system. This may be accomplished by either cutting away or making transparent selected portions of enlarged negative piece-part image 72 in drawing Fig. 5. This cutting away or rendering portions of negative image transparent is possible because only a small portion of negative image 72 adjacent the piece-part shaped area enclosed by said negative image 72 having a size that is sufficient to cover a portion of each of the photosensitive elements 74, 76, 78, 80 and 82, in the manner described above, is necessary for piece-part position sensing. The remaining portions of generally opaque negative piece-part image 72 form no part of the part sensing function of piece-part positioning apparatus 12 (Fig. 1). Numeral 128 indicates such a cutaway portion of negative image 72 and numerals 130, 132 and 134 indicate various transparent portions of negative image 72 in layer 60, all of which are shown in Fig. 5. These cutaway or transparent portions have compatible sizes, shapes and locations that allow the unobstructed passage of light source illumination from light source 68 therethrough to another set of position sensing, light sensitive elements such as those described in the above-mentioned SULLIVAN application. This additional set of light sensitive elements would be located within vision module 24, directly above layers 60 and 62 and further away from light source 68 than said layers 60 and 62 such that light from source 68 could pass through the above-described cutaway or transparent portions of negative image 72 on layer 60 and then be detected by the object-position sensors of a light-sensing part-positioning system such as those described in said SULLIVAN application. If such a combination was employed, these two types of part-positioning systems would be sequentially activated, by conventional means, such that part-positioning by the part-positioning apparatus of the present invention would be sequenced to occur after the relatively coarse positioning was completed by the coarse positioning apparatus disclosed in said SULLIVAN application.

It will be apparent to those skilled in the art from the foregoing description of our invention that various improvements and modifications can be made in it without departing from its true scope. The embodiments described herein are merely illustrative and should not be viewed as the only embodiments that might encompas our invention.

2o·                          0135495

Claims:


1.. Apparatus for precisely positioning an
object in a given plane, said apparatus comprising:
a source of illumination;
means for movably supporting said object
along a support plane within the illumination from said
source so as to cast a silhouette of given size of said
object on a second plane generally parallel to said
support plane;
imaging means for forming at said second
plane a light attenuating outline substantially similar
to the perimeter of said silhouette and slightly enlarged
with respect thereto so as to provide a gap for light
transmission from said source between the inner edge of
said outline and the outer edge of said silhouette when
the latter is located therein;
light sensing means for evaluating the
amount of light transmission through said gap at a
plurality of locations spaced around said gap; and
control means responsive to the light
evaluation at each of said locations for translating and
rotating said object on said first plane to locate said
silhouette within said outline in a predetermined
registration therewith so that said object is located on
said first plane in a corresponding registration.
2.    The apparatus of claim 1 wherein said light
transmitting gap is of substantially uniform width when
said silhouette is registered therein, said light sensing
means includes means at each of said locations for
sensing light transmission over an area extending at
least slightly inwardly and slightly outwardly of said
gap, and said control means is operative to move said
object so as to balance the light evaluated at said
different locations.

-20-

3. The apparatus of claim 2 wherein said image forming means includes at least 'a central portion of an enlarged negative of said object mounted in said second plane such that the inner perimeter of said enlarged image forms the inner perimeter of said outline.

4. Apparatus for placing an object at a particular location within a predetermined area, comprising:

a light-attenuating slightly enlarged negative image of said object with the shape of the area enclosed by said negative image forming said predetermined area;

a set of photosensitive elements arranged in a generally planar orientation with each of said elements overlaying said negative image and said negative image-enclosed area at different preselected locations, said element set being electrically divided into a plurality of photosensitive groups for generating a plurality of distinct, illumination responsive, object-positioning electrical signals;

a light source for illuminating portions of each of said photosensitive elements overlaying said negative-image enclosed area;

means for movably supporting said object between said light source and said photosensitive element set; and

means coupled to said object support means responsive to said object positioning signals for moving a shadow formed by said illuminated object within said predetermined area and toward said particular location until the space between said negative image and said object shadow is fairly uniform throughout as determined by the said photosensitive element set sensing a predetermined amount of light-source generated illumination after it passes through said space and falls on a portion of each element in said photosensitive element set.

0135495

5. The apparatus of claim 4, wherein said light-attenuating negative image is formed on an otherwise transparent sheet.

6. The apparatus of claim 5, wherein said otherwise transparent sheet is a sheet of photographic film.

7. The apparatus of claim 4, wherein said photosensitive means includes a plurality of differential amplifiers with said amplifiers having their inputs electrically connected to pairs of photosensitive elements with element pair members being located on edges of said predetermined area that are generally opposite from one another.

8. The apparatus of claim 4, wherein the said light source for illuminating said photosensitive elements includes a light and image-focusing optical lens.

9. Apparatus for positioning an object within a predetermined area, said apparatus comprising:

a source of illumination;

means for movably supporting said object along a support plane within the illumination from said source so as to cast a silhouette of given size of said object on a second plane generally parallel to said support plane;

a light-attenuating, slightly enlarged negative image of said object positioned at said second plane with the shape of the area enclosed by said negative image forming said predetermined area;

photosensitive means for evaluating the illumination received by a set of photosensitive elements through a space between said negative image and said object silhouette and for generating an electrical signal representative of the magnitude of said space at a plurality of different preselected locations; and

control means coupled to said object support means and responsive to said electrical signal for moving said object along said support plane until said object silhouette is in predetermined registration at a particular location within the enlarged object-shaped area enclosed by said negative image.

10. A method of positioning an object to a particular location within a predetermined area comprising the steps of:

forming a slightly enlarged negative image of said object, said image enclosing said predetermined area;

directing illumination through a movable light-transmitting object support so as to cast a silhouette of said object of a size that can be moved completely within said negative-image enclosing predetermined area;

sensing illumination passing through a space between said negative image and said object silhouette at a plurality of different preselected locations and generating a plurality of electrical signals representative of the magnitude of said space at said different locations; and

moving said object support and the object located thereon in response to said plurality of electrical signals until said object silhouette is in predetermined registration at a particular location within the said enlarged object-shaped area enclosed by said negative image.

Vienna,

Dipl.Ing.H/Fr 1984 07 17

0135495

Fig. 1

*Fig. 2*

0135495

Fig. 3

Fig. 4A

Fig. 4B

0135495

Fig. 5

Fig. 6

Fig. 7

Fig. 8